# EUROPÄISCHE PATENTSCHRIFT

(11) **EP 3 149 301 B1**
(45) Veröffentlichungstag und Bekanntmachung des Hinweises auf die Patenterteilung: **16.01.2019**
(21) Anmeldenummer: 15727603.1
(22) Anmeldetag: 27.05.2015
(51) Int. Cl.: F01N 3/20, B60K 15/035, B67D 7/02, B60K 13/04

(54) **VORRATSBEHÄLTER FÜR WÄSSRIGE HARNSTOFFLÖSUNG IN EINEM KFZ**
STORAGE TANK FOR AQUEOUS UREA SOLUTION IN A MOTOR VEHICLE
RÉSERVOIR RECEVANT UNE SOLUTION AQUEUSE D'URÉE DANS UN VÉHICULE AUTOMOBILE

(30) Priorität: 28.05.2014 DE 102014007706
(43) Veröffentlichungstag der Anmeldung: 05.04.2017
(73) Patentinhaber: Kautex Textron GmbH & Co. KG, 53229 Bonn (DE)
(72) Erfinder: KOUKAN, Ibrahim, 50999 Köln (DE); LÜHN, Holger, 53757 St. Augustin (DE); SCHUMACHER, Nicolai, 53227 Bonn (DE)
(74) Vertreter: Richly & Ritschel Patentanwälte PartG mbB
(86) Internationale Anmeldenummer: PCT/EP2015/061671
(87) Internationale Veröffentlichungsnummer: WO 2015/181215

(56) Entgegenhaltungen:
- WO-A1-2010/099908
- WO-A1-2013/034575
- WO-A1-2015/052166
- WO-A2-2012/100906
- DE-U1-202012 012 347
- "ISO 22241-5 2012 Diesel engines - NOx reduction agent AUS 32 - Refilling interface for passenger cars" In: "ISO 22241-5 2012 Diesel engines - NOx reduction agent AUS 32 - Refilling interface for passenger cars", 1. Dezember 2012 (2012-12-01), ISO International Standard Organisation, Geneva, XP055206355, das ganze Dokument
- "ISO 22241-4 2009 Diesel engines - NOx reduction agent AUS 32 - Refilling interface" In: "ISO 22241-4 2009 Diesel engines - NOx reduction agent AUS 32 - Refilling interface", 1. August 2009 (2009-08-01), ISO International Standard Organisation, Geneva, XP055206390, das ganze Dokument

## Beschreibung

Die Erfindung betrifft einen Vorratsbehälter in einem Kraftfahrzeug (Kfz) zur Aufnahme einer wässrigen Harnstofflösung zur katalytischen Abgasentstickung.

Die katalytische Abgasentstickung mittels einer Harnstofflösung, die vor einem Katalysator in den Abgasstrang eines Dieselfahrzeuges eingespritzt wird, ist bei Dieselfahrzeugen Stand der Technik. Dieses Verfahren wird auch als sogenanntes SCR-Verfahren (selektive katalytische Reduktion) bezeichnet. Harnstofflösungen für die katalytische Reduktion sind beispielsweise unter dem Handelsnamen "AdBlue" bekannt. Die Zusammensetzung der Harnstofflösungen sowie die Anforderungen an deren Handhabung, Transport und Bevorratung sind weitestgehend genormt, beispielsweise in den Normen ISO 22241-1 und ISO 22241-3.

Darüber hinaus wird angestrebt, die sogenannten Betankungsschnittstellen für Harnstoffbehälter ebenfalls zu normen. Insbesondere bei Personenkraftfahrzeugen hat sich die katalytische Abgasenstickung mittels wässriger Harnstofflösung durchgesetzt, wobei es je nach Größe des Kraftfahrzeuges erforderlich ist, einen mehr oder weniger großen Vorratsbehälter für die wässrige Harnstofflösung anzuordnen. Der Behälter kann je nach Größe des Kraftfahrzeuges ein Fassungsvolumen von bis zu 40 Liter umfassen. Ein Nachfüllen des Behälters ist nach etwa 15.000 bis 30.000 km Fahrleistung vorgesehen. Das Nachfüllen kann in der Werkstatt bei der Inspektion des Kraftfahrzeuges durch das Werkstattpersonal vorgenommen werden, alternativ ist es auch möglich, dass eine Betankung durch den Benutzer des Kraftfahrzeuges erfolgt.

Hierzu ist es bekannt, den Behälter entweder mit einem Zapfventil (Pistolenbetankung) oder aus einem Gebinde zu tanken. Als Gebinde haben sich sogenannte "Kruse-Flaschen" durchgesetzt. Diese Gebinde ermöglichen eine Betankung des Vorratsbehälters im sogenannten Gaspendelverfahren, das heißt dass das Gebinde auf einen Einfüllstutzen des Vorratsbehälters aufgeschraubt wird und sodann durch die Betätigung eines entsprechenden Einlassventils am Gebinde die im Gebinde vorhandene Flüssigkeit freigibt, wobei der durch die Flüssigkeit verdrängte Gasvolumenstrom in das Gebinde einströmt. Eine Verbindungsbaugruppe zur Verbindung eines Betankungsbehälters (Ausgangsbehälters) in einen Vorratsbehälter (Zielbehälter) ist beispielsweise aus der EP 1 979 265 B1 bekannt.

Die Betankung mit Befüllbehälter hat den Vorzug, dass die bei der Zersetzung des Harnstoffs entstehenden Ammoniakdämpfe bei der Betankung nicht freigesetzt werden. Eine Freisetzung ammoniakhaltiger Dämpfe geht einher mit einer verhältnismäßig intensiven Geruchsbelästigung, darüber hinaus ist das Einatmen von Ammoniak bei Überschreiten bestimmter Konzentrationen auch gesundheitsschädlich.

Die im Handel verfügbaren Betankungsflaschen besitzen relativ kleine Volumina, bei größeren Pkw ist es unter Umständen sinnvoll, den Vorratsbehälter mittels einer herkömmlichen Zapfpistole zu betanken. Da die katalytische Abgasentstickung sich bei Lastkraftwagen schon vor geraumer Zeit etabliert hat, die Vorratsbehälter bei Lastkraftwagen wesentlich größer dimensioniert sind und vielfach an Tankstellen entsprechende Betankungssysteme mittels Zapfpistole bereits vorhanden sind, ist es durchaus wünschenswert, Vorratsbehälter so auszulegen, dass sie sowohl mittels Gebinde als auch mittels Zapfventil/Zapfpistole betankbar sind.

Um bei der Betankung mittels Zapfventil eine Geruchsbelästigung des Benutzers zu minimieren, ist es bekannt, eine Betankungsentlüftungsleitung des Vorratsbehälters so anzuordnen, dass sie möglichst nicht im Bereich der Einfüllöffnung des Vorratsbehälters an die Atmosphäre mündet. Beispielsweise ist es bekannt, an dem Vorratsbehälter eine Betankungsentlüftungsöffnung mit einem daran angeschlossenen Entlüftungsschlauch vorzusehen und den Entlüftungsschlauch in ein Radhaus, beziehungsweise in eine Radhausschale des Pkw zu führen.

Um ein direktes Rückströmen der Harnstofflösung unmittelbar nach Abschalten des Zapfventils beim Betankungsvorgang zu verhindern, ist es darüber hinaus bekannt und sinnvoll, im Bereich der Mündung des Einfüllrohres in dem Vorratsbehälter eine Rückschlagklappe am Einfüllrohr vorzusehen.

Schließlich ist es bei einer solchen Gestaltung auch sinnvoll und meistens vorgesehen, dass das Einfüllrohr unterhalb des Flüssigkeitsspiegels, das heißt unterflurig, an den Vorratsbehälter angebunden ist. Diese Konstruktionsvariante lässt sich leider nur unter in Kaufnahme wesentlicher Nachteile mit einer Gestaltung kombinieren, bei der der Entlüftungsschlauch an anderer Stelle im Pkw an die Atmosphäre mündet. In diesem Falle ist es nicht mehr möglich, den Vorratsbehälter mit einer Betankungsflasche zu befüllen, die nach dem Prinzip des Gaspendelverfahrens funktioniert, weil dieses Verfahren voraussetzt, dass Luft aus dem Vorratsbehälter im Austausch mit der Flüssigkeit in das Gebinde gelangt. Ein solches Gebinde benötigt die aus dem Vorratsbehälter entweichende Luft, um die Flüssigkeit in den Vorratsbehälter freigeben zu können.

Die WO 2010/099908 A1 beschreibt einen Reduktionsmittelbehälter für Kraftfahrzeuge, der so ausgebildet ist, dass er eine Befüllung ermöglicht, wobei eine Übertankung des Reduktionsmittelbehälters sowohl aus hygienischen Gründen als auch aus Frostschutzgründen verhindert werden soll. Die WO 2013/034575 A1 beschreibt einen Einfüllstutzen, bei dem nur wenige Flüssigkeitströpfchen beim Befüllen des Vorratsbehälters mit der Entlüftungsluft nach außen gelangen.

Der Erfindung liegt daher die Aufgabe zugrunde, einen Vorratsbehälter in einem Kfz zur Aufnahme einer wässrigen Harnstofflösung zur katalytischen Abgasentstickung bereitzustellen, der sich sowohl für die Betankung mittels Zapfpistole als auch für die Betankung mittels offener Gebinde als auch für die Betankung mittels Betankungsflaschen eignet, die nach dem Gaspendelverfahren arbeiten (Kruse-Flasche).

Die Erfindung wird mit den Merkmalen des Anspruchs 1 gelöst, vorteilhafte Ausgestaltungen der Erfindung ergeben sich aus den Unteransprüchen.

Ein Gesichtspunkt der Erfindung betrifft einen Vorratsbehälter für ein Kraftfahrzeug zur Aufnahme einer wässrigen Harnstofflösung zur katalytischen Abgasentstickung umfassend einen Behälterkörper, der ein Vorratsvolumen für die Harnstofflösung umschließt, ein Einfüllrohr zur Befüllung des Vorratsvolumens, sowie Mittel zur Entlüftung des Vorratsvolumens bei der Betankung, wobei das Einfüllrohr an einem abliegenden Ende einen Befüllkopf aufweist, der Befüllkopf einen Mundlochstutzen bildet, wobei der Mundlochstutzen ein Mundloch zur Aufnahme eines Zapfventils aufweist, der Mundlochstutzen ein Außengewinde zur Aufnahme eines komplementären Überwurfgewindes einer Betankungsflasche zur Betankung im Gaspendelverfahren sowie zur Aufnahme eines Verschlussdeckels aufweist, der Mundlochstutzen eine Verschlussdeckeldichtung und/oder eine Verschlussdeckeldichtfläche aufweist, die mit einer komplementären Dichtfläche des Verschlussdeckels zusammenwirkt und der Mundlochstutzen wenigstens eine Nebenluftöffnung bildet oder aufweist, die bei angeschlossener Betankungsflasche einen Dichtsitz mit der oder an der Betankungsflasche überbrückt und die einen Nebenluftpfad von der Atmosphäre in die Betankungsfasche bildet. Der Befüllkopf des Vorratsbehälters weist weiterhin keine von der Nebenluftöffnung unterschiedliche Entlüftungsöffnung im Bereich des Mundlochs auf und eine Entlüftung des Vorratsbehälters ist über eine in einem Oberboden des Vorratsbehälters vorgesehene Entlüftungsöffnung vorgesehen.

Der erfindungsgemäße Vorratsbehälter ist dadurch gekennzeichnet, dass die Nebenluftöffnung als Durchbruch oder Vertiefung oder Kerbe (29) in einer umlaufenden Stirnfläche (19, 20) des Mundlochstutzens (10) ausgebildet ist.

Der Vorratsbehälter im Sinne der vorliegenden Erfindung ist ortsfest in einem Kraftfahrzeug, beispielsweise in einem Personenkraftfahrzeug eingebaut. Der Behälterkörper sowie auch alle anderen Teile des Vorratsbehälters können aus thermoplastischem Kunststoff bestehen. Beispielsweise kann der Behälterkörper aus thermoplastischem Kunststoff durch Extrusionsblasformen oder durch Spritzgießen erhalten worden sein. Das Einfüllrohr kann, muss allerdings nicht einstückig an den Behälterkörper angeformt sein. Der Fachmann wird verstehen, dass die Länge und Ausgestaltung des Einfüllrohrs sich im Wesentlichen nach der Einbausituation des Vorratsbehälters richtet.

Unter einem Befüllkopf im Sinne der Erfindung ist im Wesentlichen das einfüllseitige Ende des Einfüllrohres zu verstehen, welches den Mundlochstutzen sowie ein Außengewinde und den dazu gehörigen Verschlussdeckel umfasst.

Als Verschlussdeckeldichtung kann beispielsweise eine in einem Boden des Verschlussdeckels vorgesehene Dichtscheibe vorgesehen sein, die mit einer umlaufenden Stirnfläche des Mundlochstutzens zusammenwirkt. Alternativ kann als Verschlussdeckeldichtung ein O-Ring vorgesehen sein, der sich in einer außen am Mundlochstutzen umlaufenden Nut erstreckt und der mit einer Schürze eines als Verschlusskappe ausgebildeten Verschlussdeckels als Dichtsitz zusammenwirkt.

Schließlich kann die Verschlussdeckeldichtung auch durch das Außengewinde selbst gebildet werden, welches dichtend in das entsprechende Gegengewinde eines als Verschlusskappe ausgebildeten Verschlussdeckels eingreift.

Das Einfüllrohr des Vorratsbehälters gemäß der Erfindung kann so ausgebildet sein, dass es einen größeren Abstand zwischen einer entsprechenden Öffnung in der Karosserie des Kraftfahrzeuges und dem Vorratsbehälter überbrückt. Im Rahmen der Erfindung kann allerdings auch der Befüllkopf als Einfüllrohr ausgebildet sein, das heißt der Befüllkopf direkt an einen Oberboden des Vorratsbehälters angeschlossen sein.

Ein Grundgedanke der Erfindung kann dahingehend zusammengefasst werden, dass der Mundlochstutzen des Vorratsbehälters beziehungsweise des Einfüllrohres so ausgebildet ist, dass bei einem Anschluss einer Betankungsflasche als Ausgangsbehälter an den Vorratsbehälter als Zielbehälter eine gezielte Undichtigkeit derart erzeugt wird, dass die aus der Betankungsflasche in den Vorratsbehälter einströmende Flüssigkeit einen Nebenluftzug oder eine Nebenluftströmung aus der Umgebung in die Betankungsflasche zulässt, wobei der Nebenluftstrom unterhalb der Überwurfverschraubung der Betankungsflasche in die Betankungsflasche gezogen wird, so dass grundsätzlich eine Flaschenbetankung auch dann möglich ist, wenn am Befüllkopf des Einfüllrohres keine Behälterentlüftung vorgesehen ist, also kein Gasaustausch zwischen dem Vorratsbehälter einerseits und der Betankungsflasche andererseits stattfinden kann.

Auf diese Art und Weise ist es grundsätzlich möglich, die Behälterentlüftung unabhängig von den Anforderungen an die Flaschenbetankung zu gestalten.

Der Einfüllkopf des Vorratsbehälters gemäß der Erfindung umfasst vorzugsweise keine Betankungsentlüftungsleitung, wenigstens jedoch keine Betankungsentlüftungsöffnung.

Bei einer bevorzugten und zweckmäßigen Variante des Vorratsbehälters gemäß der Erfindung ist vorgesehen, dass die Nebenluftöffnung als Durchbruch oder Kerbe in einer umlaufenden Stirnfläche des Mundlochstutzens ausgebildet ist. Eine solche Gestaltung ist insbesondere dann sinnvoll, wenn eine Abdichtung des Verschlussdeckels am Außenumfang des Mundlochstutzens stattfindet, beispielsweise mittels umlaufender O-Ring-Dichtung oder über das Außengewinde selbst. Grundsätzlich ist allerdings auch denkbar, die Tiefe einer Kerbe in der umlaufenden Stirnfläche des Mundlochstutzens so zu wählen, dass die Kerbe eine Undichtigkeit des Systems bei Flaschenbetankung erzeugt, jedoch dennoch von einer Dichtscheibe entsprechender Dichte und entsprechender Flexibilität im Boden des Verschlussdeckels verschließbar ist.

Bei dem Vorratsbehälter gemäß der Erfindung ist jedenfalls vorgesehen, dass eine Undichtigkeit des Systems bei der Flaschenbetankung erzeugt wird, wobei gleichzeitig die Integrität der Abdichtung mittels Verschlussdeckel unbeeinträchtigt bleibt.

Alternativ kann die Nebenluftöffnung als Bohrung oder Durchbruch in einer Wand des Mundlochstutzens ausgebildet sein. Vorzugsweise erstreckt sich die Bohrung oder der Durchbruch radial in Bezug auf eine Symmetrieachse des Mundlochs also radial in Bezug auf eine Längsmittelachse des Mundlochs.

Bei einer vorteilhaften Variante des Vorratsbehälters gemäß der Erfindung ist eine Betankungsentlüftungsöffnung in einem Oberboden des Behälterkörpers vorgesehen. Der Anschluss an die Atmosphäre kann beispielsweise unmittelbar im Bereich der Betankungsentlüftungsöffnung vorgesehen sein, alternativ kann an die Betankungsentlüftungsöffnung an eine Betankungsentlüftungsleitung angeschlossen sein, die in einem von dem Befüllkopf abliegenden Bereich des Kraftfahrzeuges an die Atmosphäre mündet. Beispielsweise kann eine Betankungsentlüftungsleitung als Schlauch oder Rohr ausgebildet sein, der in ein Radhaus oder eine Radhausverkleidung des Kraftfahrzeuges mündet.

Wenn der Vorratsbehälter beispielsweise im Motorraum eines Kraftfahrzeuges angeordnet ist, kann an die Betankungsentlüftungsöffnung unmittelbar ein Ausperlbehälter oder eine Tropfenfalle angeschlossen sein, die beispielsweise zur Atmosphäre mittels einer Membrane verschlossen ist. Die Membrane kann beispielsweise hydrophob und gasdurchlässig sein.

Bei einer vorteilhaften Variante des Vorratsbehälters gemäß der Erfindung ist vorgesehen, dass die Betankungsentlüftungsleitung über ein an den Befüllkopf vorgesehenes Umschaltventil geführt ist, welches in einer ersten nicht betätigten Schaltstellung die Entlüftungsleitung verschließt und in einer zweiten betätigten Schaltstellung die Entlüftungsleitung freigibt. Die Mündung der Entlüftungsleitung ist bei dieser Variante des Vorratsbehälters zweckmäßigerweise von dem Befüllkopf abliegend angeordnet, beispielsweise kann diese ebenso in einen Motorraum des Kfz oder in ein Radhaus oder in eine Radhausverkleidung des Kfz geführt sein.

Die Betätigung des Umschaltventils erfolgt zweckmäßigerweise mittels eines Zapfventils.

Beispielsweise kann das Umschaltventil ein Schaltorgan umfassen, dass in einen Befüllkanal des Befüllkopfs hineinragt und durch Einführen eines Zapfventils mechanisch verlagerbar ist, so dass das Umschaltventil die zweite geöffnete Schaltstellung einnimmt, wenn das Zapfventil in den Betankungskanal eingeführt wird.

Bei einer ebenfalls vorteilhaften Variante des Vorratsbehälters gemäß der Erfindung kann eine Betätigung des Umschaltventils über den Verschlussdeckel beziehungsweise über die Verschlusskappe erfolgen, wobei der Verschlussdeckel, wenn dieser die Mündung des Mundlochstutzens verschließt, auf ein federbelastetes Schaltorgan einwirkt, dass bei Öffnen des Verschlussdeckels freigegeben wird, so dass das Umschaltventil automatisch die zweite geöffnete Schaltstellung einnimmt.

Darüber hinaus kann bei einer vorteilhaften Variante des Vorratsbehälters ein die Entlüftungsöffnung verschließendes Füllstandsbegrenzungsventil vorgesehen sein. Das Füllstandsbegrenzungsventil kann im einfachsten Fall als Tauchrohr ausgebildet sein, dieses kann allerdings auch als Schwimmerventil mit einem oder mehreren Schwimmerkörpern vorgesehen sein. In jedem Fall ist es vorteilhaft, wenn das Schwimmerventil auch als sogenanntes "rollover" Ventil ausgeführt ist, das heißt einen im Vorratsbehälter angeordneten Schwimmerkörper zur Abschaltung bei ansteigendem Flüssigkeitsspiegel sowie einen darüber angeordneten weiteren Schwimmerkörper zwecks schwerkraftbetätigter Abschaltung im Überschlagfall umfasst. Der zweite Schwimmerkörper, der zum Schließen des Entlüftungsweges bei Fahrzeugüberschlag vorgesehen ist, ist vorzugsweise dicht abschließend, um jedenfalls einen Flüssigkeitsaustritt zu vermeiden.

Ein derartiger Schwimmerkörper, der zur Betankungsabschaltung dient, ist vorzugsweise nicht dicht abschließend mit dem entsprechenden Ventilsitz ausgebildet, um nach dem Abschaltvorgang ein Leerlaufen des Einfüllrohres gewährleisten zu können.

Darüber hinaus kann im Bereich der Entlüftungsöffnung des Vorratsbehälters zusätzlich ein ein Ausperlvolumen definierendes Oberteil des Entlüftungsventils vorgesehen sein, indem ein Pilzventil zur Über- und Unterdruckregulierung in dem Vorratsbehälter angeordnet ist.

Bei einer bevorzugten und zweckmäßigen Variante des Vorratsbehälters gemäß der Erfindung ist vorgesehen, dass das Einfüllrohr unterhalb eines maximal zulässigen Flüssigkeitsspiegels innerhalb des Vorratsvolumens an den Behälterkörper angeschlossen ist. Ein solcher Anschluss des Einfüllrohres an den Behälterkörper wird auch als unterflurig beziehungsweise als unterfluriges Betankungssystem bezeichnet.

Eine Mündung des Einfüllrohres in den Behälterkörper kann beispielsweise mit einer Rückschlagklappe oder einem anders gearteten Rückschlagventil verschließbar sein.

Die Erfindung wird nachstehend unter Bezugnahme auf die beigefügten Zeichnungen anhand eines Ausführungsbeispiels erläutert.

Es zeigen:
- Figur 1:: eine schematische Darstellung eines Vorratsbehälters,
- Figur 2a:: eine Ansicht eines Befüllkopfs an einem Vorratsbehälter gemäß der Erfindung,
- Figur 2b:: eine Schnittansicht durch den in Figur 2a dargestellten Befüllkopf mit aufgeschraubtem Verschlussdeckel,
- Figur 2c:: eine vergrößerte Ansicht eines Teils des Mundlochstutzens des Befüllkopfs,
- Figur 2d:: eine Schnittansicht durch einen Befüllkopf gemäß der Erfindung sowie durch eine in dem Befüllkopf eingesetzte Betankungsflasche,
- Figur 2e:: eine vergrößerte Ansicht eines Details in Figur 2d,
- Figur 3:: eine zweite Variante eines Vorratsbehälters
- Figur 4:: eine dritte Variante des Vorratsbehälters und
- Figur 5:: eine vierte Variante des Vorratsbehälters

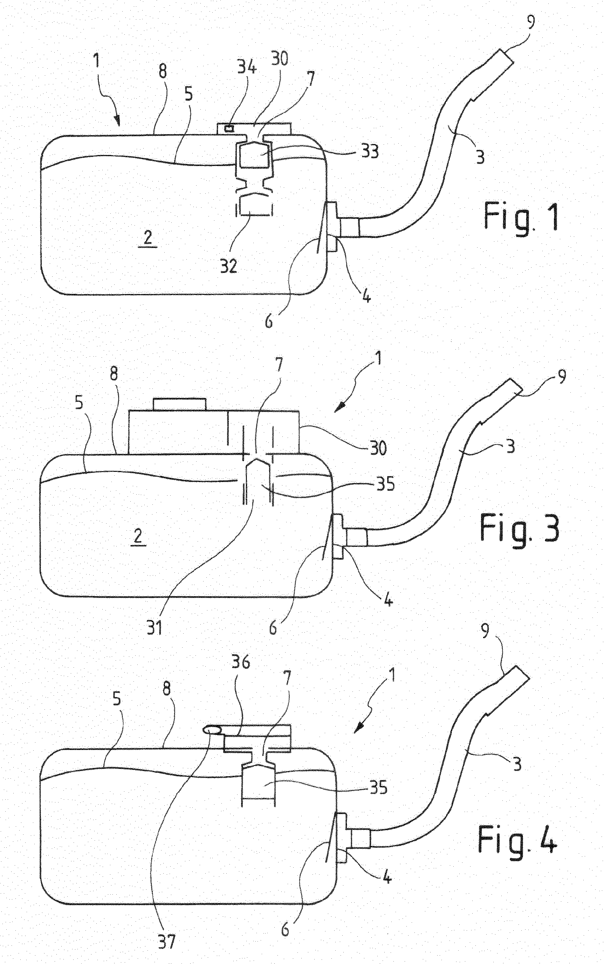

Figur 1 zeigt einen Vorratsbehälter 1 gemäß der Erfindung zur Aufnahme einer wässrigen Harnstofflösung zur katalytischen Abgasentstickung. Der Vorratsbehälter 1 ist in einem Kfz mit einer Dieselbrennkraftmaschine fest eingebaut.

Der Vorratsbehälter 1 definiert ein Vorratsvolumen 2 zur Aufnahme der wässrigen Harnstofflösung. Der Vorratsbehälter 1 umfasst weiterhin ein an diesen unterflurig angeschlossenes Einfüllrohr 3, dessen Befüllmündung 4 unterhalb eines maximalen oberen Flüssigkeitsspiegels 5 in das Vorratsvolumen 2 mündet.

Die Befüllmündung 4 ist mit einer Rückschlagklappe 6 verschließbar. Die Rückschlagklappe 6 lässt sich durch die einströmende Flüssigkeit öffnen und schließt die Befüllmündung 4, in dem Fall, dass die Flüssigkeit innerhalb des Vorratsvolumens schlagartig zurückströmt.

Der Vorratsbehälter 1 umfasst eine Entlüftungsöffnung 7 in einem Oberboden 8.

Der Oberboden 8 ist in der bestimmungsgemäßen Einbaulage des Vorratsbehälters 1 oben angeordnet.

Im Allgemeinen bezeichnen die in dieser Anmeldung verwendeten Begriffe oben/unten die Orientierung des betreffenden Teils in der Einbaulage.

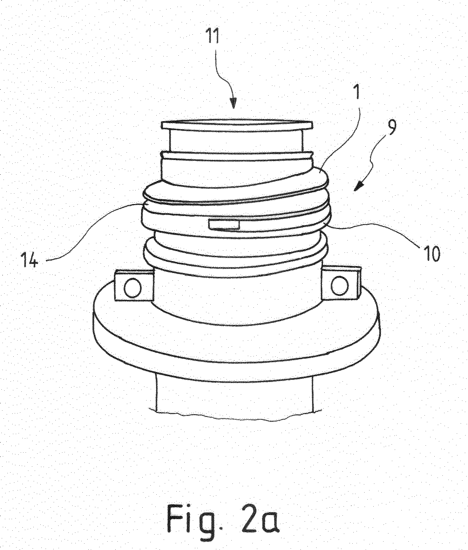

Das Einfüllrohr 3 des Vorratsbehälters 1 gemäß der Erfindung umfasst einen Befüllkopf 9, der beispielsweise in der Figur 2a dargestellt ist.

Wie eingangs bereits erwähnt wurde, ist der Vorratsbehälter 1 vorzugsweise aus thermoplastischem Kunststoff ausgebildet.

Der Befüllkopf 9 umfasst einen Mundlochstutzen 10, welcher ein Mundloch 11 zur Aufnahme eines nicht dargestellten Zapfventils, eines Trichterstutzens oder eines Steuerzylinders 26 einer Betankungsflasche 13 definiert.

Der Mundlochstutzen 10 umfasst weiterhin ein Außengewinde 14, welches zur Aufnahme eines mit Innengewinde 15 versehenen Verschlussdeckels 16 ausgebildet ist.

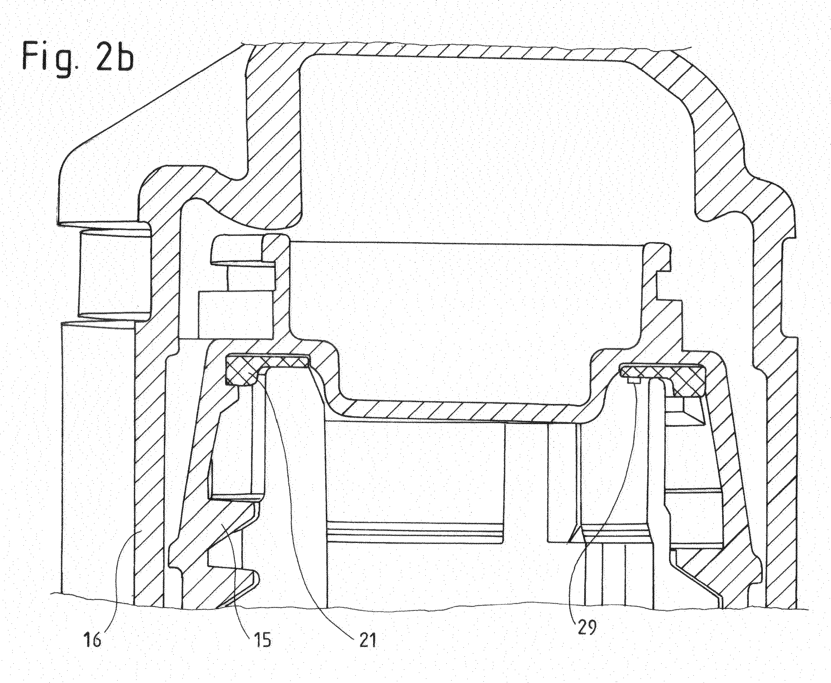

Teile des Verschlussdeckels 16, der als Verschlusskappe ausgebildet ist, und das Außengewinde 14 umgreift, sind in Figur 2b dargestellt. Das Innengewinde 15 des Verschlussdeckels 16 ist als Überwurfverschraubung ausgebildet, beziehungsweise bildet mit dem Außengewinde 14 des Mundlochstutzens 10 eine Überwurfverschraubung.

Weiterhin dient das Außengewinde 14, wie nachstehend noch beschrieben wird, zur Aufnahme eines komplementären Überwurfgewindes 23 der Betankungsflasche13.

In den Zeichnungen sind verschiedene Varianten des Vorratsbehälters 1 gemäß der Erfindung dargestellt. Bei allen Varianten ist ein gemeinsames Merkmal, dass der Befüllkopf 9 keine Entlüftungsöffnung im Bereich des Mundlochs 11 aufweist. In jeder dieser Varianten des Vorratsbehälters 1 gemäß der Erfindung ist eine Entlüftung des Vorratsbehälters 1 über die im Oberboden 8 des Vorratsbehälters 1 vorgesehene Entlüftungsöffnung 7 vorgesehen. Der Entlüftungsvolumenstrom, der durch die Verdrängung des Gasvolumens innerhalb des Vorratsbehälters bei der Betankung desselben erzeugt wird, kann unmittelbar im Bereich der Entlüftungsöffnung an die Atmosphäre gelangen, alternativ kann dieser Gasvolumenstrom über eine Betankungsentlüftungsleitung 37, die an anderer Stelle im Kraftfahrzeug an die Atmosphäre mündet, abgeführt werden. Hierauf wird im Folgenden noch eingegangen werden.

Jedenfalls ist bei allen Varianten des Vorratsbehälters 1 gemäß der Erfindung vorgesehen, dass der Mundlochstutzen 10 so ausgebildet ist, dass dieser eine Nebenluftöffnung bildet oder aufweist, so dass bei einer Betankung mittels der Betankungsflasche 13 ein Nebenluftpfad von der Atmosphäre in die Betankungsflasche 13 gebildet wird, der insbesondere dann mit einer Nebenluftströmung beaufschlagt wird, wenn der Flüssigkeitsspiegel 5 innerhalb des Vorratsbehälters 1 oberhalb der Befüllmündung 4 steht, so dass ein Entweichen von Gas durch das Einfüllrohr 3 während der Betankung nicht mehr möglich ist. In diesem Falle kann dennoch die Flüssigkeit in der Betankungsflasche 13 über das Einfüllrohr 3 beziehungsweise über einen von dem Einfüllrohr 3 gebildeten Betankungskanal in das Vorratsvolumen 2 gelangen, und zwar solange, bis der Flüssigkeitsspiegel 5 ein Betankungsentlüftungsventil 18 anhebt, welches die Entlüftungsöffnung 7 verschließt.

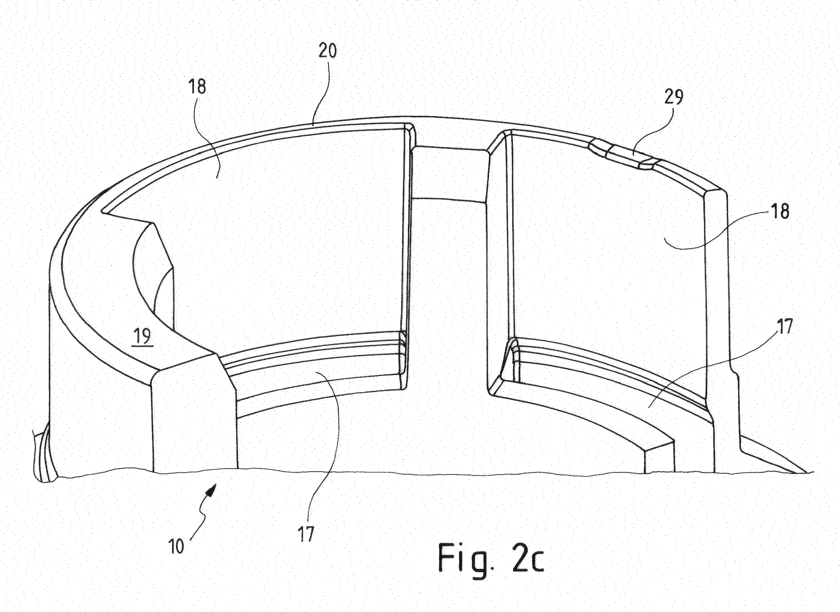

Eine mögliche Ausgestaltung einer solchen Nebenluftöffnung ist beispielsweise in Figur 2c dargestellt, bei der die Nebenluftöffnung als Durchbruch 18 in einer umlaufenden Stirnfläche 19 des Mundlochstutzens 10 ausgebildet ist.

Figur 2c zeigt eine teilgeschnittene Innenansicht des Mundlochstutzens 10. Der Mundlochstutzen 10 umfasst innenseitig Entlüftungskanäle 17, die zur Entlüftung des Vorratsvolumens 2 für den Fall der Betankung mittels Zapfventil bilden. Das Zapfventil beziehungsweise die Zapfpistole wird im Inneren des Mundlochstutzens 10 von dessen innerer Umfangswand eingefasst und geführt, wobei das bei der Betankung verdrängte Gasvolumen über die Entlüftungskanäle 17 und über Bereiche reduzierter Wandstärke 18 der Umfassungswand des Mundlochstutzens 10 entweichen kann. Wie dies auch aus Figur 2c ersichtlich ist, bleibt in den Bereichen der reduzierten Wandstärke 18 eine reduzierte Reststirnfläche 20 des Mundlochstutzens 10 stehen.

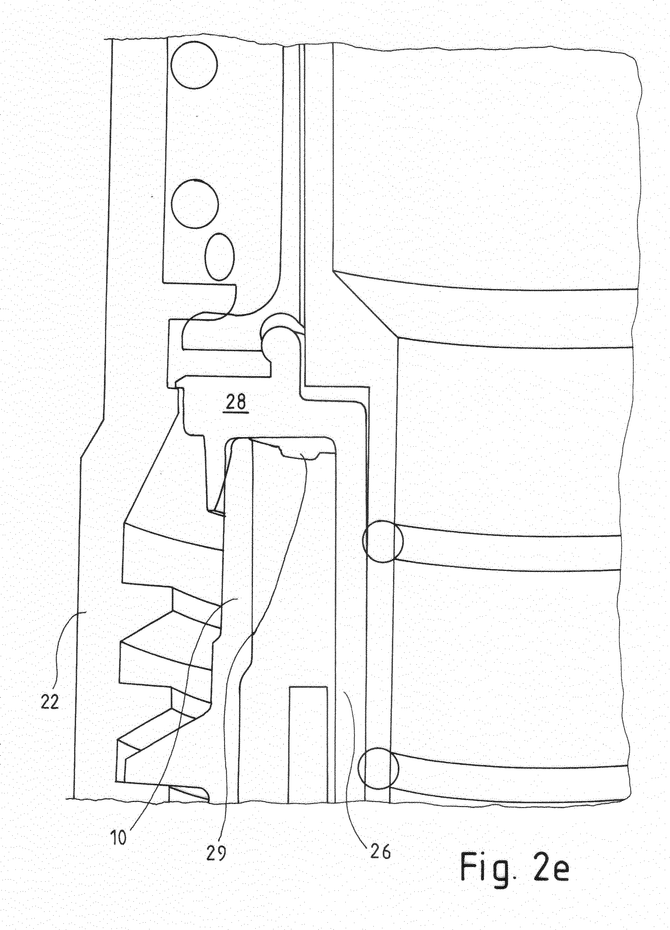

Mit 29 ist eine Kerbe beziehungsweise Vertiefung in der Reststirnfläche 20 des Mundlochstutzens 10 bezeichnet, die die zuvor erwähnte Nebenluftöffnung bildet. An dieser Stelle sei bereits angemerkt, dass die Ansicht des Mundlochstutzens 10 in Figur 2e gegenüber der Ansicht in Figur 2c um 90° gedreht ist, so dass dort die Kerbe 29 auf der linken Seite der Darstellung angeordnet ist.

Die Stirnfläche 19 des Mundlochstutzens 10 liegt dichtend gegen eine elastische Dichtung 21 in dem Verschlussdeckel 16 an, wenn der Verschlussdeckel aufgeschraubt ist. Diesbezüglich wird auf die Figur 2b Bezug genommen.

Die elastische Dichtung 21 kann beispielsweise als Elastomerring mit einem flachen, etwa rechteckigen Profil ausgebildet sein. Bei festverschlossenem Verschlussdeckel 16 füllt die elastische Dichtung 21 die Kerbe 29 aus, so dass das Vorratsvolumen 2 über den Verschlussdeckel 16 hermetisch gegenüber der Atmosphäre abgedichtet ist. Aus Gründen der vereinfachten Darstellung ist allerdings die Kerbe 29 in Figur 2b zusehen, das heißt die elastische Dichtung 21 ist dort im nicht verformten Zustand dargestellt. Die elastische Dichtung 21 kann, wie in der Figur 2b dargestellt ist, auf ihre den Mundlochstutzen 10 zugewandten Seite ein gestuftes Profil aufweisen, es ist allerdings für den Fachmann einleuchtend, dass die elastische Dichtung 21 auch ein einfaches rechteckiges Profil aufweisen kann.

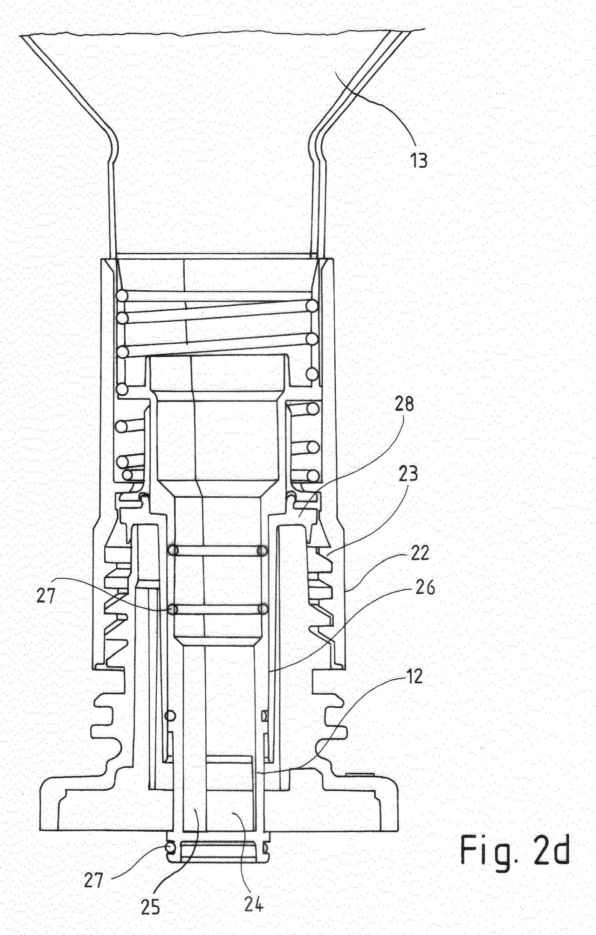

Es wird nunmehr Bezug genommen auf die Figuren 2d und 2e, in denen der Betankungszustand des Vorratsbehälters 1 mit der in den Mundlochstutzen 10 eingesetzten Betankungsflasche 13 dargestellt ist.

Hinsichtlich der Funktionsweise der Betankungsflasche 13 wird auf die EP 1 979 265 B1 Bezug genommen.

Die Betankungsflasche 13 umfasst einen Muffenanschluss 22, der mit einem Überwurfgewinde 23 auf das Außengewinde 14 des Mundlochstutzens 10 aufgeschraubt wird. Im nicht betätigten Zustand verdeckt der Muffenanschluss 22 einen Auslasszylinder 12, der einen Befüllkanal 24 und einen Entlüftungskanal 25 umschließt. Der Auslasszylinder 12 ist umfänglich gegen einen Steuerzylinder 26 abgedichtet, wobei der Steuerzylinder 26 in den Auslasszylinder 12 verschiebbar geführt ist und in der nicht dargestellten Schließstellung mittels zweier Dichtringe 27 gegen den Steuerzylinder 26 abgedichtet ist. Durch Druck auf die Betankungsflasche 13 in axialer Richtung wird eine Verschiebung des Auslasszylinders 12 gegen den Steuerzylinder 26 eine Auslassöffnung des Befüllkanals 24 freigegeben, so dass nun wässrige Harnstofflösung durch den Befüllkanal 24 aus der Betankungsflasche 13 in das Vorratsvolumen 2 des Vorratsbehälters 1 ausströmen kann. Im Gegenzug kann Gas aus dem Vorratsvolumen 2 durch den Entlüftungskanal in die Betankungsflasche 13 aufsteigen.

Das Überwurfgewinde 23 ist grundsätzlich nicht dicht an den Mundlochstutzen 10 angeschlossen, eine Abdichtung erfolgt über die Stirnfläche 19 des Mundlochstutzens 10, die gegen einen kragenförmigen Dichtsitz 28 des Steuerzylinders 26 anliegt.

Durch die Kerbe 29 in der Reststirnfläche 20 wird, wie dies aus der vergrößerten Ansicht in Figur 2e zu entnehmen ist, im Zusammenwirken mit den kragenförmigen Dichtsitz 28 des Steuerzylinders 26 eine Öffnung erzeugt, die als Nebenluftöffnung eine Undichtigkeit des Systems herbeiführt, so dass wenn der Flüssigkeitsspiegel 5 innerhalb des Vorratsbehälters 1 ansteigt, ein Belüftungspfad von der Atmosphäre zwischen dem Muffenanschluss 22 und dem Außengewinde des Mundlochstutzens 10 erzeugt wird.

Wie dies insbesondere der vergrößerten Ansicht in Figur 2b zu entnehmen ist, die dem Mundlochstutzen 10 mit aufgesetzten Verschlussdeckel 16 zeigt, liegt bei verschlossenem Vorratsbehälter 1 die Reststirnfläche 20 gegen die elastische Dichtung 21 in dem Verschlussdeckel 16 an, so dass die Kerbe 29 die Integrität der elastischen Dichtung 21 im Verschlussdeckel 16 bei aufgesetztem Verschlussdeckel 16 nicht beeinträchtigt.

Wie dies eingangs bereits erwähnt wurde, kann alternativ zu der Kerbe 29 in der Reststirnfläche 20 des Mundlochstutzens auch eine radiale Bohrung oder ein Fenster in der Umfassungswand des Mundlochstutzens 10 vorgesehen sein.

Es wird nunmehr Bezug genommen auf die Varianten des Vorratsbehälters 1 gemäß den Figuren 1, 3, 4 und 5.

Bei der in Figur 1 dargestellten Variante des Vorratsbehälters 1 gemäß der Erfindung ist die Entlüftungsöffnung 7 im Oberboden des Vorratsbehälters 1 in einem Oberteil 30 eines Betankungsentlüftungsventils 31 angeordnet. Das Betankungsentlüftungsventil 31 umfasst einen ersten unteren Schwimmerkörper 32 und einem zweiten oberen Schwimmkörper 33, wobei der erste untere Schwimmerkörper 32 die Entlüftungsöffnung 7 nicht hermetisch abschließt und der Betankungsabschaltung dient und der zweite obere Schwimmerkörper 33 als "rollover" Ventil die Entlüftungsöffnung 7 bei Fahrzeugüberschlag vollständig verschließt.

In dem Oberteil 30 des Betankungsentlüftungsventils, welches auf der Außenseite des Vorratsbehälters 1 angeordnet ist, ist darüber hinaus ein Pilzventil 34 angeordnet, welches einen Druckausgleich zwischen dem Vorratsvolumen 2 und der Atmosphäre bei Überdruck und auch bei Unterdruck innerhalb des Vorratsbehälters 1 ermöglicht.

Bei dem Vorratsbehälter 1 gemäß Figur 3, bei dem gleiche Bauteile mit gleichen Bezugszeichen versehen sind, ist das Oberteil 30 des Betankungsentlüftungsventils 31 als Flüssigkeitsfalle beziehungsweise als Ausperlbehälter ausgebildet.

Das Betankungsentlüftungsventil umfasst nur einen Schwimmerkörper 35.

Das als Flüssigkeitsfalle ausgebildete Oberteil 30 des Betankungsentlüftungsventils 31 kann ebenso ein Pilzventil oder auch eine semipermeable Membrane oder ein Filter (Filtermesh oder -gitter oder - flies)umfassen, die den Druckausgleich mit der Atmosphäre herstellt. Selbstverständlich kann das als Flüssigkeitsfalle ausgebildete Oberteil 30 des Betankungsentlüftungsventils 31 auch Kombinationen der zuvor erwähnten Elemente (Pilzventil, semipermeable Membrane, Filter etc.) umfassen. Auch ist es möglich, zur Abschirmung gegenüber der Atmosphäre in dem Oberteil 30 ein Labyrinth vorzusehen, das ebenso ein Pilzventil, eine semipermeable Membrane, ein Filter, Fliegengitter oder dergleichen umfassen kann.

Bei der in Figur 4 dargestellten Variante des Vorratsbehälters 1 gemäß der Erfindung, bei der ebenso gleiche Bauteile mit gleichen Bezugszeichen versehen sind, ist das Oberteil 30 des Betankungsentlüftungsventils 31, welches ebenso nur einen Schwimmerkörper 35 aufweist mit einer semipermeablen Membrane 36 versehen, die sich zwischen der Entlüftungsöffnung 7 und einem Anschluss einer Betankungsentlüftungsleitung 37 erstreckt. Die Membrane ist flüssigkeitsdicht, jedoch luftdurchlässig.

Die Betankungsentlüftungsleitung 37, die nur andeutungsweise dargestellt ist, ist an eine entlegene Stelle des Kfz geführt, beispielsweise in ein Radhaus.

Bei den Varianten des Vorratsbehälters 1 gemäß Figuren 3 und 4 ist der Schwimmerkörper 35 mit einer Zwangsleckage ausgeführt, das heißt dass dieser nicht hermetisch dicht schließend in den zugehörigen Dichtsitz gedrückt wird, so dass nach einem Abschaltvorgang noch im Einfüllrohr 3 anstehende Flüssigkeit langsam in das Vorratsvolumen 2 ablaufen kann.

Dies ist auch bei dem ersten unteren Schwimmer 32 bei der Variante des Vorratsbehälters 1 gemäß Figur 1 der Fall.

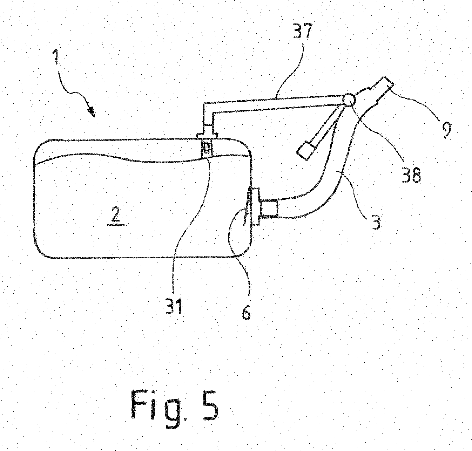

Eine weitere Variante des Vorratsbehälters 1 gemäß der Erfindung ist beispielsweise in Figur 5 dargestellt. Hier sind ebenfalls gleiche Bauteile mit gleichen Bezugszeichen versehen. Dort ist an das Betankungsentlüftungsventil 31 außen eine Betankungsentlüftungsleitung 37 angeschlossen, die über den Befüllkopf 9 an eine entlegene Stelle des Kfz geführt ist. Am Befüllkopf 9 ist ein Umschaltventil 38 vorgesehen, welches beispielsweise einen nicht dargestellten Schaltstößel umfasst, der in den Betankungskanal des Mundlochstutzens 10 hineinragt. Dieser Schaltstößel ist durch ein Zapfventil betätigbar und gibt im betätigten Zustand einen Entlüftungsweg in der Entlüftungsleitung 37 zur Atmosphäre frei, wohingegen die Entlüftungsleitung 37 nach Entfernen des Zapfventils aus dem Befüllkopf 9 wieder verschlossen wird.

### Bezugszeichenliste

- 1: Vorratsbehälter
- 2: Vorratsvolumen
- 3: Einfüllrohr
- 4: Befüllmündung
- 5: Flüssigkeitsspiegel
- 6: Rückschlagklappe
- 7: Entlüftungsöffnung
- 8: Oberboden
- 9: Befüllkopf
- 10: Mundlochstutzen
- 11: Mundloch
- 12: Auslasszylinder
- 13: Betankungsflasche
- 14: Außengewinde
- 15: Innengewinde des Verschlussdeckels
- 16: Verschlussdeckel
- 17: Entlüftungskanäle
- 18: Bereiche reduzierter Wandstärke
- 19: Stirnfläche
- 20: Reststirnfläche
- 21: elastische Dichtung
- 22: Muffenanschluss
- 23: Überwurfgewinde
- 24: Befüllkanal
- 25: Entlüftungskanal
- 26: Steuerzylinder
- 27: Dichtring
- 28: kragenförmiger Dichtsitz
- 29: Kerbe
- 30: Oberteil Betankungsentlüftungsventil
- 31: Betankungsentlüftungsventil
- 32: erster unterer Schwimmer
- 33: zweiter oberer Schwimmer
- 34: Pilzventil
- 35: Schwimmerkörper
- 36: Membrane
- 37: Betankungsentlüftungsleitung
- 38: Umschaltventil

## Patentansprüche

1. Vorratsbehälter (1) für ein Kraftfahrzeug zur Aufnahme einer wässrigen Harnstofflösung zur katalytischen Abgasentstickung umfassend einen Behälterkörper, der ein Vorratsvolumen (2) für die Harnstofflösung umschließt, ein Einfüllrohr (3) zur Befüllung des Vorratsvolumens (2), sowie Mittel zur Entlüftung des Vorratsvolumens (2) bei der Betankung,
wobei das Einfüllrohr (3) an einem abliegenden Ende einen Befüllkopf (9) aufweist, der Befüllkopf (9) einen Mundlochstutzen (10) bildet,
wobei der Mundlochstutzen (10) ein Mundloch (11) zur Aufnahme eines Zapfventils aufweist,
der Mundlochstutzen ein Außengewinde (14) zur Aufnahme eines komplementären Überwurfgewindes (23) einer Betankungsflasche (13) zur Betankung im Gaspendelverfahren sowie zur Aufnahme eines Verschlussdeckels (16) aufweist,
der Mundlochstutzen (10) eine Verschlussdeckeldichtung und/oder eine Verschlussdeckeldichtfläche aufweist, die mit einer komplementären Dichtfläche des Verschlussdeckels (16) zusammenwirkt und
der Mundlochstutzen (10) wenigstens eine Nebenluftöffnung bildet oder aufweist, die bei angeschlossener Betankungsflasche (13) einen Dichtsitz mit der oder an der Betankungsflasche (13) überbrückt und die einen Nebenluftpfad von der Atmosphäre in die Betankungsfasche (13) bildet,
wobei der Befüllkopf (9) des Vorratsbehälters (1) keine von der Nebenluftöffnung unterschiedliche Entlüftungsöffnung im Bereich des Mundlochs (11) aufweist und wobei eine Entlüftung des Vorratsbehälters (1) über eine in einem Oberboden (8) des Vorratsbehälters (1) vorgesehene Entlüftungsöffnung (7) vorgesehen ist,
**dadurch gekennzeichnet, dass**
die Nebenluftöffnung als Durchbruch oder Vertiefung oder Kerbe (29) in einer umlaufenden Stirnfläche (19, 20) des Mundlochstutzens (10) ausgebildet ist.

2. Vorratsbehälter nach Anspruch 1, **dadurch gekennzeichnet, dass** die Betankungsentlüftungsöffnung (7) an eine Betankungsentlüftungsleitung (37) angeschlossen ist, die in einem von dem Befüllkopf (9) abliegenden Bereich des Kraftfahrzeuges an die Atmosphäre mündet.

3. Vorratsbehälter nach einem der Ansprüche 1 oder 2, **dadurch gekennzeichnet, dass** die Betankungsentlüftungsleitung (37) über ein an dem Befüllkopf (9) vorgesehenes Umschaltventil (38) geführt ist, welches in einer ersten Schaltstellung die Betankungsentlüftungsleitung (37) verschließt und in einer zweiten, Schaltstellung die Betankungsentlüftungsleitung (37) freigibt.

4. Vorratsbehälter nach Anspruch 3, **dadurch gekennzeichnet, dass** das Umschaltventil (38) ein Schaltorgan umfasst, das in ein Befüllkanal des Befüllkopfs (9) hineinragt und durch Einführen eines Zapfventils verlagerbar ist, so dass das Umschaltventil (38) die zweite Schaltstellung einnimmt, wenn das Zapfventil in den Befüllkanal eingeführt wird.

5. Vorratsbehälter nach Anspruch 3, **dadurch gekennzeichnet, dass** das Umschaltventil (38) ein Schaltorgan umfasst, das durch den Verschlussdeckel (16) in der ersten nicht betätigten Schaltstellung gehalten wird, und welches beim Abnehmen des Verschlussdeckels (16) das Schaltorgan freigibt, so dass das Umschaltventil (38) die zweite Schaltstellung einnimmt, in der die Betankungsentlüftungsleitung (37) freigegeben ist.

6. Vorratsbehälter nach einem der Ansprüche 1 bis 5, **dadurch gekennzeichnet, dass** ein die Entlüftungsöffnung (7) verschließendes Betankungsentlüftungsventil 31 als Füllstandsbegrenzungsventil vorgesehen ist.

7. Vorratsbehälter nach einem der Ansprüche 1 bis 6, **dadurch gekennzeichnet, dass** das Einfüllrohr (3) unterhalb eines maximal zulässigen Flüssigkeitsspiegels (5) innerhalb des Vorratsvolumens (2) an den Behälterkörper angeschlossen ist.

## Claims

1. Storage container (1) for a motor vehicle for receiving an aqueous urea solution for catalytic exhaust gas denitrification comprising a container body that encloses a storage volume (2) for the urea solution, a filler pipe (3) for filling the storage volume (2), and means for venting the storage volume (2) during filling,
wherein the filler pipe (3) has, at a remote end, a filler head (9), the filler head (9) forms an orifice connector (10),
wherein the orifice connector (10) has an orifice (11) for receiving a dispensing nozzle,
the orifice connector has an external thread (14) for receiving a matching union thread (23) of a filling bottle (13) for filling according to the gas displacement method, and for receiving a closure lid (16),
the orifice connector (10) has a closure lid seal and/or a closure lid sealing face that cooperates with a matching sealing face of the closure lid (16), and
the orifice connector (10) forms or has at least one secondary air opening which, when a filling bottle (13) is connected, bridges a seal seat with the or on the filling bottle (13) and which forms a secondary air path from the atmosphere into the filling bottle (13),
wherein the filler head (9) of storage container (1) has no venting opening, which is different from the secondary air opening, in the region of the orifice (11) and wherein venting of Storage container (1) is provided via a venting opening (7) provided in a ceiling (8) of Storage container (1),
**characterized in that**
the secondary air opening is formed as a cutout or recess or notch (29) in an encircling end face (19, 20) of the orifice connector (10).

2. Storage container according to Claim 1, **characterized in that** the filling venting opening (7) is connected to a filling venting line (37) which opens to the atmosphere in a region of the motor vehicle that is remote from the filler head (9).

3. Storage container according to either of Claims 1 and 2, **characterized in that** the filling venting line (37) is guided via a switching valve (38) which is provided on the filler head (9) and, in a first switching position, closes the filling venting line (37) and, in a second switching position, opens the filling venting line (37).

4. Storage container according to Claim 3, **characterized in that** the switching valve (38) comprises a switching member that projects into a filler duct of the filler head (9) and can be displaced by insertion of a dispensing nozzle such that the switching valve (38) adopts the second switching position when the dispensing nozzle is inserted into the filler duct.

5. Storage container according to Claim 3, **characterized in that** the switching valve (38) comprises a switching member which is held by the closure lid (16) in the first, non-actuated switching position and which, when the closure lid (16) is removed, releases the switching member such that the switching valve (38) adopts the second switching position in which the filling venting line (37) is open.

6. Storage container according to one of Claims 1 to 5, **characterized in that** a filling venting valve (31) that closes the venting opening (7) is provided as a fill level limiting valve.

7. Storage container according to one of Claims 1 to 6, **characterized in that** the filler pipe (3) is connected to the container body below a maximum permissible liquid level (5) within the storage volume (2).

## Revendications

1. Réservoir (1) pour un véhicule automobile destiné à contenir une solution aqueuse d'urée pour la dénitrification catalytique de gaz d'échappement, comprenant un corps de réservoir, qui renferme un volume de stockage (2) pour la solution d'urée, un tube de remplissage (3) pour le remplissage du volume de stockage (2), ainsi que des moyens de ventilation du volume de stockage (2) lors du ravitaillement,
dans lequel le tube de remplissage (3) présente à une extrémité éloignée une tête de remplissage (9), et la tête de remplissage (9) forme une tubulure d'embouchure (10),
dans lequel la tubulure d'embouchure (10) présente une embouchure (11) destinée à recevoir un pistolet de remplissage,
la tubulure d'embouchure présente un filet extérieur (14) destiné à recevoir un filet de raccord complémentaire (23) d'une bouteille de ravitaillement (13) pour le ravitaillement par le procédé d'échange de gaz ainsi que destiné à recevoir un couvercle de fermeture (16),
la tubulure d'embouchure (10) présente un joint de couvercle de fermeture et/ou une face d'étanchéité de couvercle de fermeture, qui coopère avec une face d'étanchéité complémentaire du couvercle de fermeture (16), et
la tubulure d'embouchure (10) forme ou présente au moins une ouverture d'aération secondaire qui, lorsque la bouteille de ravitaillement (13) est fermée, recouvre un siège d'étanchéité avec ou sur la bouteille de ravitaillement (13) et qui forme un chemin d'aération secondaire de l'atmosphère à la bouteille de ravitaillement (13),
dans lequel la tête de remplissage (9) du réservoir (1) ne présente aucune ouverture de ventilation différente de l'ouverture d'aération secondaire dans la région de l'embouchure (11) et dans lequel une ventilation du réservoir (1) est prévue par une ouverture de ventilation (7) prévue dans une paroi supérieure (8) du réservoir (1),
**caractérisé en ce que** l'ouverture d'aération secondaire est réalisée par une percée ou un creux ou une entaille (29) dans une face frontale périphérique (19, 20) de la tubulure d'embouchure (10).

2. Réservoir selon la revendication 1, **caractérisé en ce que** l'ouverture de ventilation de ravitaillement (7) est raccordée à un conduit de ventilation de ravitaillement (37), qui débouche à l'atmosphère dans une région du véhicule automobile éloignée de la tête de remplissage (9).

3. Réservoir selon une des revendications 1 ou 2, **caractérisé en ce que** le conduit de ventilation de ravitaillement (37) est mené via une soupape de commutation (38) prévue sur la tête de remplissage (9), qui dans une première position de commutation ferme le conduit de ventilation de ravitaillement (37) et dans une deuxième position de commutation libère le conduit de ventilation de ravitaillement (37).

4. Réservoir selon la revendication 3, **caractérisé en ce que** la soupape de commutation (38) comprend un organe de commutation, qui pénètre dans un canal de remplissage de la tête de remplissage (9) et qui peut être déplacé par l'introduction d'un pistolet de remplissage, de telle manière que la soupape de commutation (38) vienne occuper la deuxième position de commutation, lorsque l'on introduit le pistolet de remplissage dans le canal de remplissage.

5. Réservoir selon la revendication 3, **caractérisé en ce que** la soupape de commutation (38) comprend un organe de commutation, qui est maintenu par le couvercle de fermeture (16) dans la première position de commutation non actionnée, et qui libère l'organe de commutation lors de l'enlèvement du couvercle de fermeture (16), de telle manière que la soupape de commutation (38) vienne occuper la deuxième position de commutation, dans laquelle le conduit de ventilation de ravitaillement (37) est libéré.

6. Réservoir selon l'une quelconque des revendications 1 à 5, **caractérisé en ce qu'**il est prévu une soupape de ventilation de ravitaillement (31) fermant l'ouverture de ventilation (7) sous la forme d'une soupape de limitation du niveau de remplissage.

7. Réservoir selon l'une quelconque des revendications 1 à 6, **caractérisé en ce que** le tube de remplissage (3) est raccordé au corps de réservoir en dessous d'un niveau de liquide maximal admissible (5) à l'intérieur du volume de stockage (2).
